Europäisches Patentamt

European Patent Office

Office européen des brevets

(11) Numéro de publication : **0 188 964**
**B1**

# (12) FASCICULE DE BREVET EUROPÉEN

(45) Date de publication du fascicule du brevet :
**15.03.89**

(51) Int. Cl.⁴ : **H 04 N   5/10**

(21) Numéro de dépôt : **85402613.5**

(22) Date de dépôt : **24.12.85**

(54) Circuit de décodage du top trame dans un signal vidéocomposite.

(30) Priorité : **27.12.84 FR 8419921**

(43) Date de publication de la demande :
**30.07.86 Bulletin 86/31**

(45) Mention de la délivrance du brevet :
**15.03.89 Bulletin 89/11**

(84) Etats contractants désignés :
**AT BE DE FR GB IT NL**

(56) Documents cités :
**FR--A-- 2 443 777**
**US--A-- 4 238 770**

(73) Titulaire : **THOMSON GRAND PUBLIC**
**74, rue du Surmelin**
**F-75020 Paris (FR)**

**Deutsche Thomson-Brandt GmbH**
**Hermann-Schwer-Strasse 3 Postfach 1307**
**D-7730 Villingen-Schwenningen (DE)**

(72) Inventeur : **Badefort, Bernard**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

## Description

L'invention est relative à un circuit de décodage du top trame dans un signal vidéocomposite.

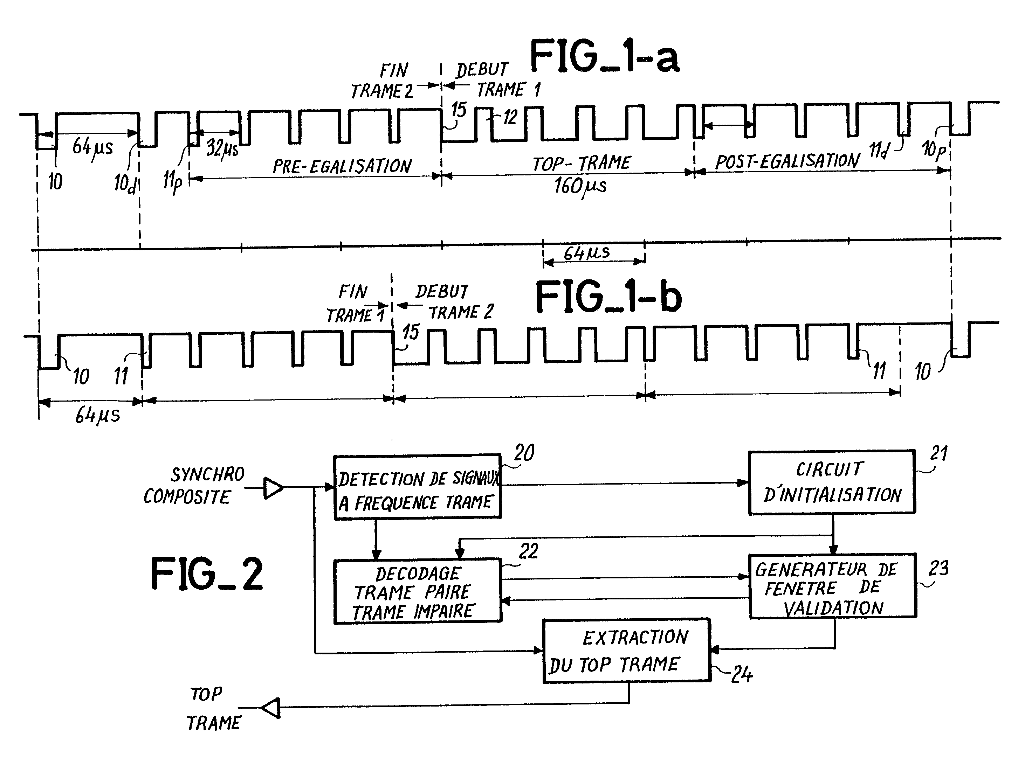

La partie image d'un signal de télévision, ou signal vidéocomposite, comporte, d'une part, des informations relatives à l'image proprement dite et, d'autre part, des informations de synchronisation des lignes et des trames. La partie du signal vidéocomposite qui concerne la synchronisation est appelée « synchrocomposite ». Ce signal synchrocomposite comprend des impulsions ou « tops » de synchronisation ligne 10 (figures 1$_a$ et 1$_b$) et, entre deux trames successives : des impulsions de préégalisation, le top trame, et des impulsions de postégalisation succédant au top trame. Le top trame est composé d'un nombre déterminé n d'impulsions positives ; les impulsions d'égalisation sont négatives et le nombre d'impulsions de préégalisation ainsi que le nombre d'impulsions de postégalisation est égal au même nombre n.

Dans le standard 625 lignes, chaque top de synchronisation ligne a une durée de 4,7 microsecondes au niveau bas et dans une même trame deux tops de ligne sont séparés par la durée H d'une ligne, c'est-à-dire 64 microsecondes. Le nombre d'impulsions de préégalisation est égal à cinq. La durée de chacune de ces impulsions 11 est la moitié de celle d'un top de synchronisation ligne 10, c'est-à-dire 2,35 µs, et l'intervalle séparant deux impulsions de préégalisation est de 32 µs. Les impulsions de postégalisation sont également au nombre de cinq avec une même durée de 2,35 µs au niveau bas et un intervalle de séparation de 32 µs. Le top de trame proprement dit se compose de cinq impulsions 12 dont chacune a une durée de 4,7 µs au niveau haut, et deux impulsions successives 12 sont séparées par une période de 32 µs ; ainsi le top trame proprement dit a une durée de 160 µs.

Le signal vidéocomposite étant du type à trames entrelacées, le signal synchrocomposite ne présente pas les mêmes caractéristiques selon que la trame est de rang pair ou de rang impair.

A la fin d'une trame de rang pair (figure 1$_a$) le dernier top ligne 10$_d$ est séparé par une demi-période ligne H/2, c'est-à-dire 32 µs, de la première impulsion 11$_p$ de préégalisation. Au début d'une trame de rang impair (figure 1$_a$) la dernière impulsion 11$_d$ de postégalisation est séparée par une demi-période ligne H/2 du premier top de synchronisation ligne 10$_p$.

A la fin d'une trame de rang impair (figure 1$_b$) le dernier top 10 de synchronisation ligne est séparé du premier top de préégalisation par une période H (64 µs). Au début d'une trame de rang pair (figure 1$_b$) la dernière impulsion de postégalisation est séparée du premier top ligne par une durée H, soit 64 µs.

Ces divers décalages permettent d'assurer qu'une trame de rang impair commence au début d'une ligne et se termine au milieu d'une ligne, et, réciproquement, qu'une trame de rang pair commence au milieu d'une ligne et se termine à la fin d'une ligne ; les salves d'impulsion d'égalisation sont destinées à mettre les circuits intégrateurs, habituellement prévus pour détecter les top trame, dans le même état électrique au début de chaque trame quel que soit son rang, pair ou impair.

Pour détecter le top trame on fait généralement appel à un intégrateur à condensateur dont le niveau de charge dépend du niveau du signal synchrocomposite. Ce condensateur se charge quand le signal synchrocomposite est au niveau haut et se décharge quand ce signal est au niveau bas. La constante de temps du circuit de charge ou décharge du condensateur est telle que ce dernier ne se décharge que d'une très faible valeur pendant les tops de synchronisation ligne 10. Par contre il reste déchargé pendant le top trame. Ainsi le top trame est constitué par un signal de niveau bas et le front avant de ce top trame, c'est-à-dire le front de descente, est détecté quand la charge du condensateur descend au-dessous d'un seuil déterminé. Dans ces conditions le top trame obtenu à la sortie du circuit de décodage à condensateur est retardé par rapport au début 15 (figure 1) du top trame du signal synchrocomposite ; ce retard est le temps que met le condensateur pour passer de sa pleine charge à la charge qui correspond audit seuil.

On a proposé (Brevet français FR-A-2 443 777) des moyens destinés à stabiliser le retard entre le top trame décodé et le top trame proprement dit sans cependant s'affranchir de ce retard.

Un tel retard est gênant ; il peut altérer la qualité de l'image reproduite.

L'invention remédie à cet inconvénient, c'est-à-dire qu'elle fournit un circuit de décodage du top trame ne provoquant pratiquement aucun retard entre le début du top trame et le début du top trame décodé. En outre le circuit selon l'invention ne fait pas appel à d'autre signal (tel qu'un signal d'horloge externe) que le signal synchrocomposite.

A cet effet le circuit selon l'invention est caractérisé en ce qu'il comprend : des moyens numériques pour produire, à partir du signal synchrocomposite, un premier signal rectangulaire à la demi-fréquence ligne pendant toute la trame, et un second signal rectangulaire à demi-fréquence ligne pendant la trame sauf pendant les périodes d'égalisation et de top trame où ce signal est à la fréquence ligne, les phases relatives de ces deux signaux rectangulaires dépendant de la parité du rang de la trame et un moyen pour corréler ces signaux rectangulaires afin d'engendrer un top trame décodé dont le début coïncide, pratiquement sans retard, avec le début du top trame du signal synchrocomposite.

Dans une réalisation le moyen de corrélation comprend un moyen pour engendrer un signal, ou fenêtre, de validation à partir desdits signaux rectangulaires et dont le début coïncide avec le flanc arrière de la dernière impulsion de préégalisation et la fin avec un flanc de la première impulsion de postégalisation, ainsi qu'un circuit numérique pour combiner la fenêtre de validation avec le signal synchrocomposite afin d'engendrer ledit top trame décodé.

D'autres caractéristiques et avantages de l'invention apparaîtront avec la description de certains de ses modes de réalisation, celle-ci étant effectuée en se référant aux dessins ci-annexés sur lesquels :

les figures 1a et 1b, déjà décrites, sont des diagrammes montrant les signaux synchrocomposites,

la figure 2 est un schéma, sous forme de blocs, d'un circuit de décodage selon l'invention,

la figure 3 représente un mode de réalisation du circuit de la figure 2, et

les figures 4, 5 et 6 sont des diagrammes illustrant le fonctionnement du circuit de la figure 3.

L'exemple que l'on va décrire en relation avec les figures 2 à 6 se rapporte, comme la figure 1, au standard 625 lignes à 50 trames par seconde. Toutefois, comme on le verra plus loin, l'invention n'est pas limitée à ce standard.

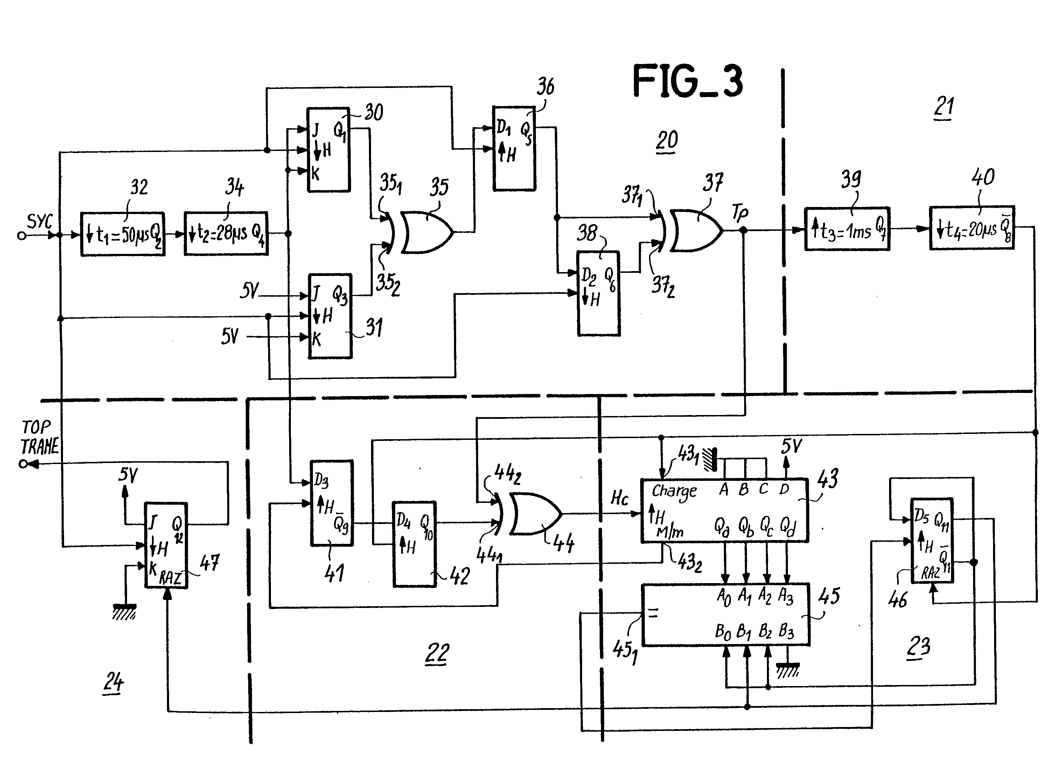

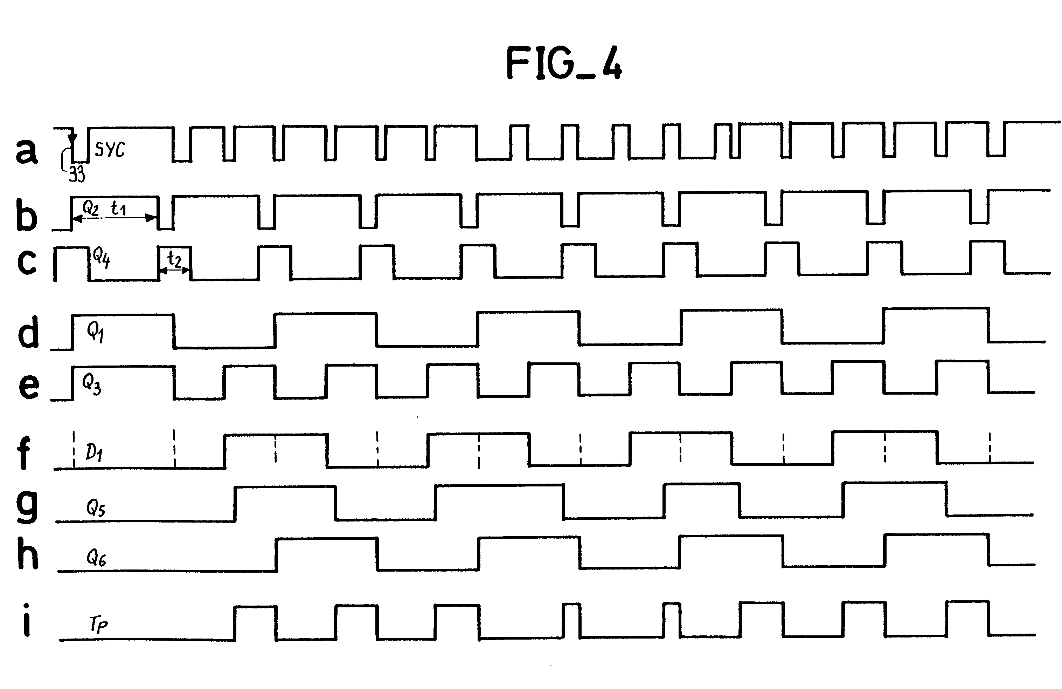

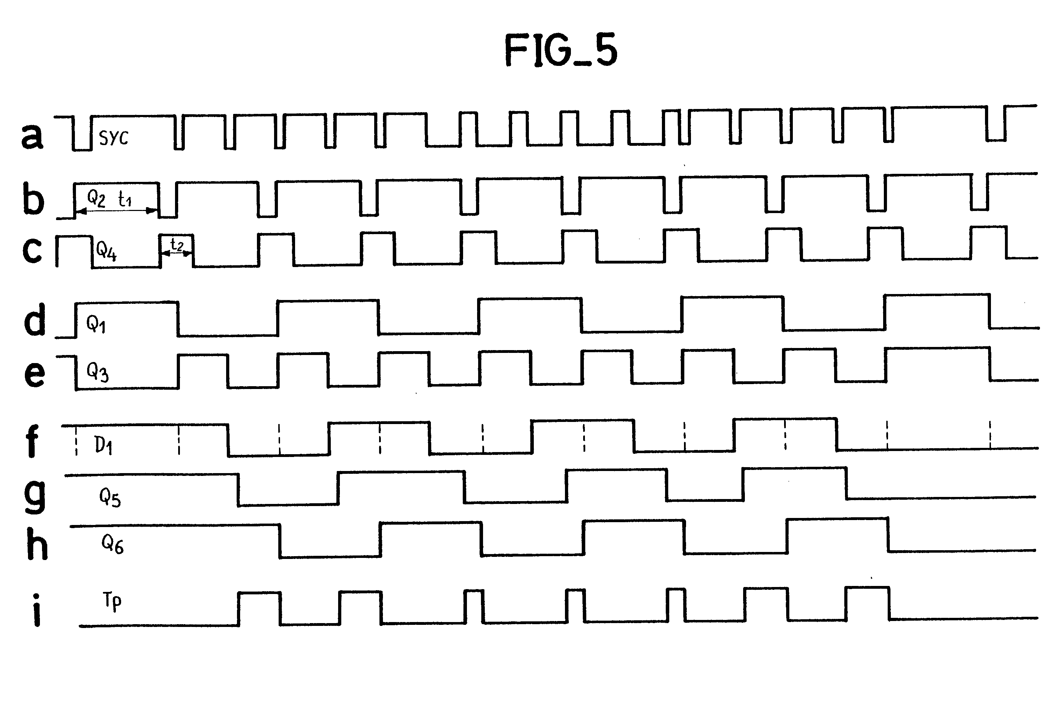

Le signal synchrocomposite est appliqué sur l'entrée d'un circuit 20 de détection de signaux à la fréquence trame (figures 2 et 3). Ce circuit 20 engendre les signaux représentés sur les diagrammes des figures 4b à 4i ou 5b à 5i, en particulier le signal $T_p$ (figure 4i ou 5i) formé d'un train d'impulsions à la fréquence trame et dont le nombre d'impulsions est, à chaque trame, fonction de la parité du rang de cette trame.

Ce signal $T_p$ est utilisé, d'une part, par un circuit 21 d'initialisation permettant de remettre à l'état initial à chaque trame les autres circuits du décodeur et, d'autre part, par un circuit 22 déterminant la parité du rang de la trame en cours d'analyse. Sur la figure 2 ce circuit 22 a été noté « décodage trame paire, trame impaire ».

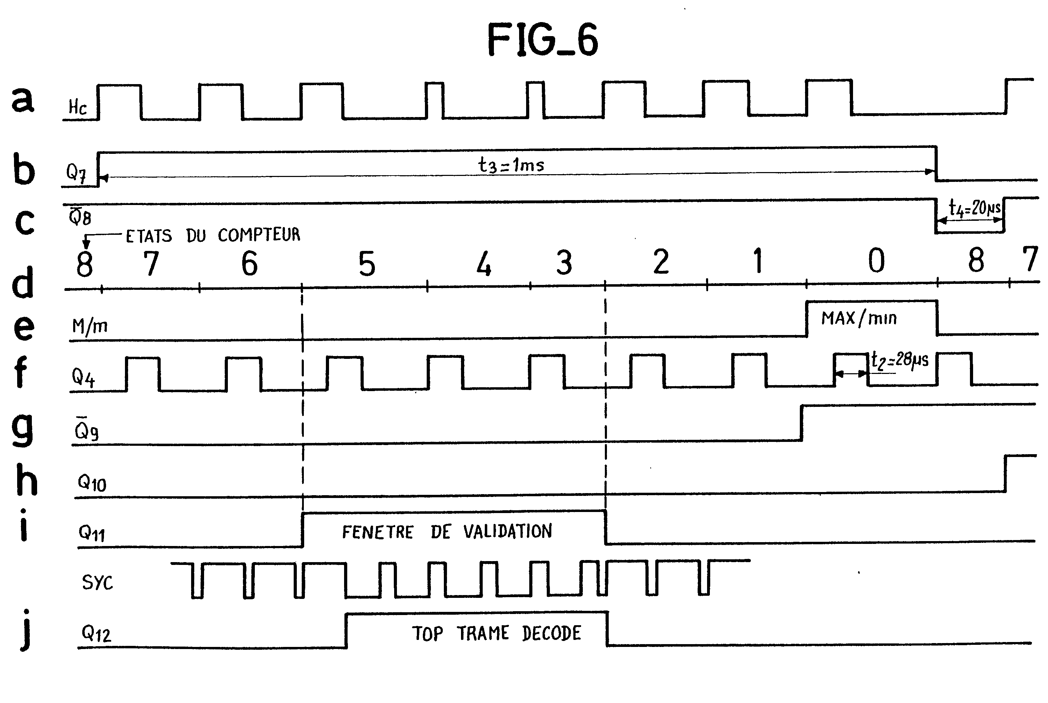

Le signal $H_c$ (figure 6a) engendré par le circuit 22 est utilisé par un générateur 23 d'un signal $Q_{11}$ appelé « fenêtre de validation », et représenté par la figure 6i, entourant le top trame (figure 1). Ce signal de validation $Q_{11}$ est appliqué à une entrée d'un circuit 24 à bascule permettant d'extraire, grâce à ladite fenêtre, le top trame du signal synchrocomposite.

On se réfère maintenant à la figure 3.

Le circuit 20 de détection de signaux à la fréquence trame comporte deux bascules 30 et 31 du type JK dont les entrées d'horloge H reçoivent le signal synchrocomposite. Le signal synchrocomposite est également appliqué à l'entrée d'une bascule monostable 32 délivrant un signal $Q_2$ (figure 4b et 5b) constitué par une impulsion de durée $t_1$, 50 µs dans un exemple, après l'apparition d'un front descendant 33 (figure 4a) sur son entrée. La sortie du monostable 32 est appliquée à l'entrée d'un second monostable 34 de même type que le précédent mais imposant un retard de durée $t_2$ égale à 28 µs dans l'exemple. Le signal de sortie $Q_4$ du monostable 34 est représenté par la figure 4c ou 5c.

Comme on le verra plus loin avec la description du fonctionnement, il suffit que la durée $t_1$ soit comprise entre H/2 et H c'est-à-dire entre 32 et 64 µs et que la durée $t_1 + t_2$ soit comprise entre H et 3H/2 c'est-à-dire entre 64 µs et 96 µs.

La sortie $Q_4$ du monostable 34 est appliquée sur les entrées J et K de la bascule 30.

Sur les entrées J et K de la bascule 31 sont appliqués des signaux de valeur constante, 5 volts, correspondant à un niveau 1 binaire.

La sortie $Q_1$ de la bascule 30 est connectée à la première entrée $35_1$ d'une porte OU exclusif 35 dont la seconde entre $35_2$ est reliée à la sortie $Q_3$ de la bascule JK 31. Les signaux de sortie $Q_1$ et $Q_3$ sont représentés par les figures 4d et 4e ou 5d et 5e.

La sortie de la porte OU exclusif 35 est connectée à l'entrée $D_1$ d'une bascule 36 du type D dont l'entrée d'horloge H reçoit le signal synchrocomposite. La sortie $Q_5$ — représentée par les figures 4g ou 5g — de la bascule 36 de type D est reliée, d'une part, à la première entrée $37_1$ d'une porte OU exclusif 37 et, d'autre part, à l'entrée $D_2$ d'une bascule 38 de type D dont l'entrée d'horloge H reçoit le signal synchrocomposite. La sortie $Q_6$ de cette bascule 38 est connectée à la seconde entrée $37_2$ de la porte OU exclusif 37.

La bascule 36 de type D est déclenchée par les fronts montants des impulsions sur son entrée d'horloge alors que la bascule 38, également de type D, est déclenchée par les fronts descendants des impulsions sur son entrée d'horloge H.

Le signal $T_p$ à la sortie de la porte OU exclusif 37 est représenté par les figures 4i et 5i.

Cette sortie de la porte 37 est reliée à l'entrée du circuit d'initialisation 21 qui est constitué par deux bascules monostables en série 39 et 40. L'entrée de la bascule monostable 39 est connectée à la sortie de la porte OU exclusif 37 ; elle est déclenchée par les fronts montants et elle impose un retard $t_3 = 1$ milliseconde. Le signal de sortie $Q_7$ de cette bascule est représenté par la figure 6b. Comme on le verra plus loin le retard $t_3$ peut être choisi à une valeur quelconque entre 480 microsecondes et 20 millisecondes.

La sortie du monostable 39 est reliée à l'entrée du monostable 40 qui est déclenché par les fronts d'impulsions descendants et impose un retard $t_4$ de 20 microsecondes. La sortie $\bar{Q}_8$ du monostable 40 est représentée par la figure 6c. C'est l'impulsion de sortie $\bar{Q}_8$ qui constitue le signal d'initialisation pour le circuit 22 de décodage du rang de la trame et le générateur 23 de fenêtre de validation.

Le circuit 22 de décodage du rang de la trame comporte une bascule 41 de type D déclenchée par les fronts montants d'impulsions sur son entrée d'horloge H et dont l'entrée $D_3$ reçoit le signal de sortie $Q_4$ du monostable 34. La sortie $\bar{Q}_9$ de cette bascule 41 est connectée à l'entrée $D_4$ d'une autre bascule 42 de type D également déclenchée par les fronts montants d'impulsions sur son entrée d'horloge H. Le signal sur la sortie $\bar{Q}_9$ de la bascule 41 est représenté par la figure 6g. Le signal $Q_{10}$ sur la sortie de la bascule 42 est représenté par la figure 6h. L'entrée d'horloge de la bascule 42 reçoit le signal de sortie $\bar{Q}_8$ du monostable 40.

L'entrée d'horloge H de la bascule 41 reçoit un signal d'une sortie $43_2$ M/m d'un compteur 43 faisant partie du générateur 23 de fenêtre de validation.

La sortie $Q_{10}$ de la bascule 42 est reliée à la première entrée $44_1$ d'une porte OU exclusif 44 dont la seconde entrée $44_2$ reçoit le signal de sortie $T_p$ de la porte OU exclusif 37.

Le signal de sortie $H_C$ de la porte OU exclusif 44 est représenté par la figure 6a. Il est appliqué sur l'entrée d'horloge H du compteur 43 faisant partie du générateur 23. Ce compteur est déclenché par les fronts montants d'impulsions. Son entrée $43_1$ de charge reçoit le signal $\bar{Q}_8$ du monostable 40. Ce compteur est à chargement asynchrone, c'est-à-dire qu'il se charge tant que l'impulsion $\bar{Q}_8$ appliquée sur son entrée 43 est au niveau zéro.

Ce compteur 43 se charge à la valeur 8 imposée par les signaux appliqués sur ses entrées A B C D : A = B = C = 0 et D = 1 (5 volts). Le compteur 43 est, dans un exemple, de type 74 LS 191 ; il fonctionne ici en décompteur.

Le générateur 23 comporte, en outre, un comparateur 45 de deux mots de quatre bits présentant des premières entrées $A_0$, $A_1$, $A_2$, $A_3$ connectées aux sorties respectives $Q_a$, $Q_b$, $Q_c$, $Q_d$ du compteur 43 et des secondes entrées $B_0$, $B_1$, $B_2$, $B_3$ ainsi qu'une sortie $45_1$ émettant un signal 1 lorsque les mots sur ses entrées sont égaux et qui est connectée à l'entrée d'horloge H d'une bascule 46 de type D faisant également partie du générateur 23. La bascule 46 de type D est déclenchée par les fronts montants d'impulsions sur son entrée d'horloge. Elle est montée en diviseur par deux avec sa sortie $\bar{Q}_{11}$ reliée à son entrée $D_5$. La sortie $Q_{11}$ est reliée à l'entrée $B_1$ du comparateur 45. Les entrées $B_0$ et $B_2$ reçoivent le signal de sortie $\bar{Q}_{11}$ de la bascule 46. La dernière entrée $B_3$ du comparateur 45 est au niveau zéro.

La sortie M/m $43_2$ du compteur 43 est à « 0 » quand le contenu du compteur n'est pas nul et est à « 1 » quand le contenu du compteur est zéro. Le signal M/m est représenté par la figure 6e.

Le signal $Q_{11}$ de sortie de la bascule 46 constitue la fenêtre de validation qui est représentée par la figure 6i.

Le circuit 24 d'extraction du top trame comporte une bascule JK 47 déclenchée par les fronts descendants d'impulsions appliquées sur son entrée d'horloge H. Cette entrée reçoit le signal synchrocomposite alors que l'entrée J est à « 1 » (5 volts) et l'entrée K à « 0 ». L'entrée de remise à zéro RAZ reçoit le signal $Q_{11}$ de sortie de la bascule 46 du générateur 23. La sortie $Q_{12}$ de la bascule 47 représente le top trame décodé. Il est représenté par la figure 6j.

On va maintenant décrire à l'aide des diagrammes des figures 4, 5 et 6 le fonctionnement du décodeur de top trame.

La figure 4 se rapporte à la situation représentée sur la figure 1a, c'est-à-dire la fin d'une trame de rang pair et le début d'une trame de rang impair. La figure 4a est d'ailleurs identique à la figure 1a. La figure 5 correspond à la situation de la figure 1b, c'est-à-dire la fin d'une trame de rang impair et le début d'une trame de rang pair. La figure 5a est identique à la figure 1b.

La figure 6 correspond aux situations des figures 1a et 4, c'est-à-dire à la fin d'une trame paire et au début d'une trame impaire.

On rappelle tout d'abord que le fonctionnement d'une bascule JK est le suivant : si J = K = 0 la sortie Q se maintient dans l'état où elle est, même si des impulsions sont appliquées sur l'entrée H. Si J = K = 1 la sortie Q change d'état (c'est-à-dire passe de zéro à un, ou de un à zéro) à chaque front de descente d'impulsions appliquées sur l'entrée H. Si J = 0 et K = 1, alors Q = 0 après un front de descente sur l'entrée H, et si J = 1 et K = 0 on obtient Q = 1 après le front de descente sur l'entrée H.

Une porte du type OU exclusif délivre un signal zéro si ses entrées reçoivent des signaux identiques. Par contre, la sortie de la porte OU exclusif est à un si les signaux sur ses deux entrées ont des valeurs différentes.

Compte-tenu du fonctionnement d'une bascule JK exposé ci-dessus on voit que les monostables 32 et 34 permettent, par le choix des retards $t_1$ et $T_2$, d'appliquer des signaux J = K = 0 qui rendent aveugle la bascule 30 à une impulsion sur deux lorsque ces impulsions sont séparées par une période H/2, c'est-à-dire pendant les périodes de post et préégalisation et la période d'émission du top trame. Ainsi le signal $Q_1$ en sortie de la bascule 30 (figure 4d) est un signal rectangulaire à demi-fréquence ligne : 7 812,5 hertz et son rapport cyclique est de un.

Par contre la bascule 31 fonctionne en permanence en diviseur par deux car ses entrées J et K ne reçoivent pas le signal $Q_4$ mais sont telles que : J = K = 1. Ainsi en dehors des périodes d'égalisation et de top trame le signal $Q_3$ (figures $4_e$ et $5_e$) est à la demi-fréquence ligne 7 812,5 hertz alors que pendant les périodes d'égalisation et de top trame ce signal rectangulaire a la fréquence double, c'est-à-dire la fréquence ligne de 15 625 hertz. Autrement dit le signal $Q_1$ est un signal à spectre pur à demi-fréquence ligne tandis que le signal $Q_3$ est également à demi-fréquence ligne mais contient des informations à fréquence trame.

La comparaison des figures 4 et 5 montre que les phases relatives des signaux $Q_1$ et $Q_3$ diffèrent en fonction de la parité de la trame. On effectue la corrélation de ces signaux $Q_1$ et $Q_3$ pour décoder le top trame.

Le signal $D_1$ à la sortie de la porte OU exclusif 35 (et qui constitue aussi le signal à l'entrée de la bascule 36) est représenté par les figures 4f et 5f. Ce signal $D_1$ a toujours la même valeur, « zéro » ou « un », pendant la durée de la trame sauf pendant les périodes d'égalisation et de top trame où il varie à la demi-fréquence ligne. La comparaison des figures 4f et 5f montre qu'à la fin d'une trame de rang pair et au début d'une trame de rang impair (figure 4f) le nombre de demi-périodes à la demi-fréquence ligne du signal $D_1$ est supérieur d'une unité au nombre correspondant du même signal $D_1$ à la fin d'une trame de rang impair et au début d'une trame de rang pair (figure 5f). La bascule 38 de type D et la porte OU exclusif 37 mettent à profit cette différence pour engendrer un signal $T_p$ à la sortie de la porte 37 qui comporte huit impulsions dans le premier cas (fin d'une trame paire, début d'une trame impaire) et sept impulsions dans le second cas (fin d'une trame impaire, début d'une trame paire). En outre, la bascule 36 de type D permet d'éliminer les parasites du signal $D_1$ qui sont dus à la simultanéité de la commutation des signaux sur les entrées $35_1$ et $35_2$ de la porte OU exclusif 35.

Pour bien comprendre le fonctionnement de cette partie du circuit 20 on rappelle qu'une bascule de type D est telle que l'entrée D est transférée sur la sortie Q lorsqu'un front montant (bascule 36) est appliqué sur son entrée d'horloge H ou, pour d'autres types de bascules (38), lorsque c'est un front descendant qui est appliqué sur l'entrée d'horloge.

Ainsi on obtient, par la combinaison « OU exclusif » des signaux $Q_5$ et $Q_6$, huit impulsions $T_p$ dans le cas de la figure 4i et sept impulsions Tp dans le cas de la figure 5i. Ces impulsions sont toujours positives. Elles apparaissent dès que le signal synchrocomposite apparaît.

On voit sur la figure 4i que : la première impulsion du train Tp apparaît entre le début du premier top de préégalisation et le début du second top de préégalisation ; la seconde impulsion du train Tp se situe entre la fin du troisième top de préégalisation et le début du quatrième top de préégalisation ; la troisième impulsion du train Tp apparaît entre la fin du cinquième top de préégalisation et le début du top trame ; les quatrième et cinquième impulsions du train Tp correspondent respectivement aux seconde et quatrième impulsions du top trame ; la sixième impulsion du train Tp correspond à l'intervalle séparant la fin du premier top de postégalisation du second top de postégalisation ; la septième impulsion de train Tp se situe entre la fin de la troisième impulsion de postégalisation et le début de la quatrième impulsion de postégalisation ; et, enfin, la huitième impulsion du train Tp coïncide avec l'intervalle séparant la fin du cinquième top de postégalisation du début du top ligne suivant.

On voit sur la figure 5i que : la première impulsion du train Tp se situe entre la fin du second top de préégalisation et le début du troisième top de la même période ; la seconde impulsion de ce train apparaît entre la fin du quatrième top de préégalisation et le début du cinquième top ; les troisième, quatrième et cinquième impulsions coïncident avec respectivement les première, troisième et cinquième impulsions du top trame ; la sixième impulsion du train Tp apparaît entre la fin du second top de postégalisation et le début du troisième top de postégalisation ; et, enfin la septième impulsion de train Tp de la figure 5i se situe entre la fin du quatrième top de postégalisation et le début du cinquième top de la même période.

Le monostable 39 de l'étage d'initialisation 21 produit une impulsion positive $Q_7$ (figure 6b) de durée $t_3 = 1$ milliseconde lors du premier front de montée du signal Tp.

La durée $T_3$ doit respecter les conditions suivantes : elle doit être supérieure à la durée des impulsions Tp, c'est-à-dire supérieure à 480 microsecondes, et inférieure à une période de trame, c'est-à-dire 20 millisecondes.

Le front de descente de l'impulsion $Q_7$ déclenche le monostable 40 qui engendre une impulsion négative de durée $t_4$ égale à 20 microsecondes sur la sortie $\bar{Q}_8$. Cette impulsion $\bar{Q}_8$ constitue l'impulsion d'initialisation utilisée pour déclencher (par l'entrée $43_1$) la charge du compteur et pour déterminer, par la bascule 42 de l'étage 22, le niveau — 7 ou 8 — de charge de ce compteur 43.

L'étage 22 fait appel aux signaux $T_p$, $\bar{Q}_8$, $Q_4$ et M/m (figure 6e) pour engendrer un signal $H_C$ (figure 6a), appliqué sur l'entrée d'horloge H du compteur 43 de l'étage 23, qui déterminera si ledit compteur 43 effectuera un décomptage de 8 à 0 ou de 7 à 0, c'est-à-dire qui déterminera le rang de la trame.

Lorsque le front montant de l'impulsion M/m arrive alors qu'est absente une impulsion positive $Q_4$ (figure 6f) sur l'entrée $D_3$, la sortie $Q_9$ prend la valeur O et donc $\bar{Q}_9$ la valeur 1 (figure 6g).

A la sortie $Q_{10}$ de la bascule 42 de type D on obtient un signal (figure 6h) de fréquence 25 hertz et de rapport cyclique 1. La combinaison de ce signal $Q_{10}$ avec le signal Tp par le OU exclusif 44 fournit le signal $H_C$ (figure 6a). Si la première entrée $44_1$ de la porte OU exclusif 44 est à zéro le signal $H_C$ est, comme dans l'exemple de la figure 6, formé d'impulsions positives identiques aux impulsions Tp ; par contre si l'entrée $44_1$ de la porte 44 (c'est-à-dire le signal $Q_{10}$) a la valeur « un », le signal $H_C$ correspond au signal Tp mais est formé d'impulsions négatives.

Lorsque sur l'entrée $43_1$ du compteur 43 de l'étage 23 générateur d'une fenêtre de validation est appliquée une impulsion négative $\bar{Q}_8$ (figure 6c) le compteur 43 se charge à la valeur 8. Ce chargement dure tant que l'impulsion $\bar{Q}_8$ est au niveau 0. Quand le signal $\bar{Q}_8$ reprend la valeur « 1 », le signal $Q_{10}$ appliqué sur l'entrée $44_1$ de la porte OU exclusif 44 de l'étage 22 prend la valeur « 1 » dans l'exemple représenté sur la figure 6 ou « 0 » pour une autre trame. Si le signal $Q_{10}$ est au niveau « 0 » le signal $H_C$ de sortie de la porte 44, appliqué sur l'entrée d'horloge du compteur 43, reste à zéro et ce compteur reste chargé à la valeur 8. Mais si le signal $Q_{10}$ sur l'entrée $44_1$ de la porte 44 est à « un » la sortie de cette porte passe à « 1 » ; il en résulte une transition montante sur l'entrée d'horloge H du compteur 43 qui le fait passer de l'état 8 à l'état 7 ; il reste dans cet état tant que des impulsions ne sont pas appliquées sur son entrée d'horloge.

L'impulsion $\bar{Q}_8$, simultanément à la charge du compteur 43, remet à zéro la bascule 46 de type D de l'étage 23 qui est montée en diviseur par deux. Quand cette remise à zéro est effectuée la sortie $Q_{11}$ (figure 6i) est à « zéro » et la sortie $\bar{Q}_{11}$ à « un ». Dans ces conditions les entrées $B_0$, $B_1$, $B_2$ et $B_3$ du comparateur 45 reçoivent les signaux suivants :

$$B_0 = B_2 = \bar{Q}_{11} = 1,$$
$$B_1 = Q_{11} = 0,$$
$$B_3 = 0 ;$$

autrement dit sur les entrées $B_0$, $B_1$, $B_2$, $B_3$ du comparateur 45 est appliqué le nombre binaire 0101, soit 5 en décimal ($B_3$ est le bit de poids le plus fort).

Ainsi lorsque le compteur 43, partant de la valeur 8 ou 7, se met à décompter il passe par la valeur 5 ; à cet instant la sortie $45_1$ du comparateur 45 fournit une impulsion positive qui fait passer la sortie $Q_{11}$ de la bascule 46 de l'état 0 à l'état 1 et la sortie $\bar{Q}_{11}$ de l'état 1 à l'état 0, comme représenté sur les figures 6d et 6i. Ainsi sur les entrées B du comparateur 45 est alors appliqué le nombre binaire 0010, soit 2 en décimal.

Quand le contenu du compteur atteint ensuite la valeur 2 la sortie $45_1$ du comparateur 45 applique sur l'entrée d'horloge de la bascule 46 une impulsion positive et la sortie $Q_{11}$ revient à zéro et la sortie $\bar{Q}_{11}$ repasse à « 1 » (figures 6d et 6i).

La sortie $Q_{11}$, qui reste à l'état « 1 » quand le contenu du compteur est compris entre 5 et 2, constitue une fenêtre de validation.

Quand le contenu du compteur 43 atteint la valeur zéro le signal M/m (figure 6e) en sortie $43_2$ passe de zéro à un, ce qui provoque le passage de la sortie $\bar{Q}_9$ (figure 6g) de la bascule 41 de l'étage 22 à la valeur un ; ainsi on change la phase du signal d'horloge du compteur en fonction du rang de la trame et on prépare ce compteur 43 à décompter.

C'est la sortie $Q_{12}$ de la bascule 47 qui délivre le top trame décodé (figure 6i). Pour comprendre le fonctionnement de cet étage final 24 on rappelle que lorsqu'une bascule JK reçoit un signal 0 sur son entrée de remise à zéro RAZ, sa sortie Q reste à zéro quelles que soient les valeurs des signaux sur ses autres entrées J, K et H. Par contre lorsque l'entrée RAZ d'une bascule JK reçoit un signal de niveau 1 et lorsque J = 1 et K = 0 la sortie Q prend la valeur 1 dès l'apparition d'un front descendant sur l'entrée d'horloge H.

Ainsi la sortie $Q_{12}$ passe à 1 dès l'apparition du premier front descendant du signal synchrocomposite. Il y a donc un retard négligeable entre le début du top trame décodé $Q_{12}$ et le début du top trame du signal synchrocomposite. Ce retard négligeable est de quelques nanosecondes : c'est le temps de propagation dans la bascule 47.

L'invention s'applique non seulement au standard 625 lignes mais également au standard 525 lignes dans lequel on prévoit six impulsions de préégalisation, six impulsions dans le top trame, et six impulsions dans la période de postégalisation alors que dans le standard 625 lignes ce nombre est de cinq. On peut, pour ce standard 525 lignes, utiliser le montage de la figure 3 avec des changements peu importants : le compteur 43 est chargé à la valeur 9 ; la fenêtre de validation apparaît entre les contenus 6 et 3 (au lieu de 5 et 2) et l'horloge du compteur est inversée avant le chargement.

## Revendications

1. Circuit de décodage du top trame d'un signal synchrocomposite à trames entrelacées, le top trame comprenant n impulsions positives précédées par n impulsions négatives de préégalisation et suivies par n impulsions négatives de postégalisation, ces impulsions du top trame et d'égalisation apparaissant à une fréquence qui est le double de la fréquence de balayage des lignes, caractérisé en ce qu'il comprend des moyens numériques pour produire, à partir du signal synchrocomposite, un signal rectangulaire ($Q_1$) à la demi-fréquence ligne, et un signal rectangulaire ($Q_3$) à demi-fréquence ligne pendant la trame sauf pendant les périodes d'égalisation et de top trame où ce signal ($Q_3$) est à la fréquence ligne, les phases relatives de ces deux signaux rectangulaires dépendant de la parité du rang de la trame, et un moyen (20, 22, 23, 24) pour corréler ces signaux rectangulaires ($Q_1$, $Q_3$) afin d'engendrer un top trame décodé dont le début coïncide, pratiquement sans retard, avec le début du top trame du signal synchrocomposite.

2. Circuit selon la revendication 1, caractérisé en ce que le moyen (23, 24) pour corréler les signaux rectangulaires ($Q_1$, $Q_3$) comprend un moyen (23) pour engendrer un signal, ou fenêtre, de validation ($Q_{11}$) à partir desdits signaux rectangulaires ($Q_1$, $Q_3$) et dont le début coïncide avec le flanc arrière de la dernière impulsion de préégalisation et la fin avec un flanc de la première impulsion de postégalisation, et un circuit numérique (24) pour combiner la fenêtre de validation avec le signal synchrocomposite afin d'engendrer ledit top trame décodé.

3. Circuit selon la revendication 2, caractérisé en ce que le circuit (24) pour combiner le signal de validation avec le signal synchrocomposite comprend une bascule (47) du type JK sur l'entrée de remise à zéro de laquelle est appliqué le signal de validation ($Q_{11}$) et dont les signaux appliqués sur les entrées J et K ont pour valeurs respectivement 1 et 0, l'entrée d'horloge (H) recevant le signal synchrocomposite.

4. Circuit selon la revendication 1, 2 ou 3, caractérisé en ce qu'il comprend un moyen (20) mettant à profit les déphasages relatifs différents entre les signaux rectangulaires ($Q_1$ et $Q_3$) selon la parité du rang de la trame pour produire un train d'impulsions (Tp) n'apparaissant que pendant les périodes de pré et postégalisation, et de trame et tel que le nombre d'impulsions et les instants de leur apparition soient fonctions de la parité du rang de la trame.

5. Circuit selon les revendications 2 et 4, caractérisé en ce qu'il comporte, pour engendrer la fenêtre de validation ($Q_{11}$), un compteur (43) chargé à chaque trame avec un nombre (N) qui correspond au plus grand nombre des impulsions dudit train (Tp), les impulsions de ce train (Tp) commandant le décomptage du contenu de ce compteur (43), des moyens (45 et 46) étant prévus pour engendrer le signal de validation quand le contenu du compteur est compris entre une première valeur (5) inférieure à N, et une seconde valeur (2) inférieure à la première mais supérieure à zéro.

6. Circuit selon la revendication 5, caractérisé en ce qu'il comporte un comparateur (45) sur la première entrée ($A_0$, $A_1$, $A_2$, $A_3$) duquel est appliqué le signal de sortie ($Q_a$, $Q_b$, $Q_c$, $Q_d$) du compteur (43) et dont la seconde entrée ($B_0$, $B_1$, $B_2$, $B_3$) dépend de l'état d'une bascule (46) recevant le signal de sortie ($45_1$) du comparateur (45) afin que ce signal sur la seconde entrée soit successivement égal auxdites première et seconde valeurs.

7. Circuit selon la revendication 5 ou 6, caractérisé en ce que, pour permettre le chargement du compteur (43) à une valeur qui dépend de la parité du rang de la trame, il comprend des moyens (41, 42, 44) pour engendrer un signal ($H_C$) de commande de décomptage du contenu du compteur (43) qui, pour une trame de rang de parité déterminée, est identique au signal (Tp) de train d'impulsions et pour une trame dont le rang est de l'autre parité est constitué d'impulsions de signe contraire à celui dudit train (Tp).

8. Circuit selon une quelconque des revendications précédentes, caractérisé en ce que pour engendrer le premier signal rectangulaire ($Q_1$) à demi-fréquence ligne il comporte une bascule (30) montée en diviseur de fréquence par deux et un moyen de retard, tels que des monostables (32, 34), du signal synchrocomposite qui engendre un signal ($Q_4$) inhibant cette bascule pour une impulsion sur deux lors des périodes d'égalisation et du top trame.

9. Circuit selon la revendication 8, caractérisé en ce que ladite bascule engendrant le premier signal rectangulaire ($Q_1$) est une bascule du type JK dont l'entrée d'horloge (H) reçoit le signal synchrocomposite et dont les entrées J et K sont connectées à la sortie du moyen de retard (32, 34).

10. Circuit selon l'une quelconque des revendications précédentes, caractérisé en ce que le moyen pour engendrer le second signal rectangulaire ($Q_3$) comporte une bascule (31) telle qu'une bascule JK montée en diviseur de fréquence par deux.

11. Circuit selon la revendication 4, caractérisé en ce que, pour combiner les deux signaux rectangulaires ($Q_1$ et $Q_3$) afin de produire ledit train d'impulsions (Tp) contenant un nombre d'impulsions qui est fonction de la parité du rang de la trame, il comporte une première porte (35) du type OU exclusif dont les entrées ($35_1$, $35_2$) reçoivent lesdits signaux rectangulaires respectifs ($Q_1$, $Q_3$), une bascule (38) du type D dont l'entrée d'horloge reçoit le signal synchrocomposite et l'entrée de données ($D_2$) reçoit le signal provenant de la première porte OU exclusif (35), et une seconde porte OU exclusif (37) dont la première entrée ($37_2$) reçoit le signal de sortie ($Q_6$) de la bascule (38) de type D et dont la seconde entrée ($37_1$) reçoit un signal représentant la sortie de la première porte OU exclusif (35).

12. Circuit selon la revendication 11, caractérisé en ce que le signal appliqué sur la seconde entrée ($37_1$) de la seconde porte OU exclusif (37) et sur l'entrée de données ($D_2$) de la bascule (38) de type D est fourni par la sortie ($Q_5$) d'une autre bascule (36) de type D dont l'entrée de données ($D_1$) est reliée à la sortie de la première porte OU exclusif (35) et dont l'entrée d'horloge (H) reçoit le signal synchrocomposite.

## Claims

1. A circuit for decoding the vertical synchro pulses of a composite synchronization signal in an interlaced frame system, with the vertical synchro pulses comprising n positive pulses preceded by n negative front equalizing pulses and followed by n negative back equalizing pulses, these vertical synchro pulses and equalizing pulses having a frequency which is twice the line scanning frequency, characterized in that it comprises digital means for producing, on the basis of the composite synchronization signal, a rectangular signal ($Q_1$) of half the line frequency, and a rectangular signal ($Q_3$) of half the line frequency during the frame, except during the equalizing and the vertical synchro pulse periods, when the signal ($Q_3$) has line frequency, the relative phase of the two rectangular signals depending upon the rank parity of the frame, and that it comprises a means (20, 22, 23, 24) for correlating these rectangular signals ($Q_1$, $Q_3$) in order to generate decoded vertical synchro pulses, whose start coincides, substantially without delay, with the start of the vertical synchro pulses of the composite synchronization signal.

2. A circuit according to claim 1, characterized in that the means (23, 24) for correlating the rectangular signals ($Q_1$, $Q_3$) comprises a means (23) for generating from said rectangular signals ($Q_1$, $Q_3$) a validation signal or window ($Q_{11}$) whose start coincides with the trailing edge of the last front equalizing pulse and whose end coincides with an edge of the first back equalizing pulse, and that it comprises a digital circuit (24) for combining the enabling window with the composite synchronization signal in order to generate said decoded vertical synchro pulses.

3. A circuit according to claim 2, characterized in that the circuit (24) for combining the enabling signal with the composite synchronization signal comprises a flip-flop (47) of the JK-type, receiving via its zero-setting input the enabling signal ($Q_{11}$) and via its J and K inputs the value 1 and 0 respectively, the clock input (H) receiving the composite synchronization signal.

4. A circuit according to claim 1, 2 or 3, characterized in that it comprises a means (20) exploiting the different relative phase shifts between the rectangular signals ($Q_1$ and $Q_3$) in accordance with the rank parities of the frame for producing a pulse train (Tp), which appears only during the front and back equalizing periods and the frame period, such that the number of pulses and the instants of their appearance are functions of the rank parity of the frame.

5. A circuit according to claims 2 and 4, characterized in that, for generating an enabling window ($Q_{11}$), it comprises a counter (43) loaded at each frame with a number (N) that corresponds to the highest number of pulses of said pulse train (Tp), the train pulses (Tp) controlling the down-counting of the contents of this counter (43), means (45 and 46) being provided for generating an enabling signal when the contents of the counter is comprised between a first value (5) smaller than N, and a second value (2) smaller than the first one but above zero.

6. A circuit according to claim 5, characterized in that it comprises a comparator (45), the first input ($A_0$, $A_1$, $A_2$, $A_3$) receiving the output signal ($Q_a$, $Q_b$, $Q_c$, $Q_d$) of the counter (43) and the second input ($B_0$, $B_1$, $B_2$, $B_3$) depending upon the status of a flip-flop (46), which receives the output signal ($45_1$) of the comparator (45), so that this signal at the second input successively becomes equal to said first and second values.

7. A circuit according to claim 5 or 6, characterized in that in order to load the counter (43) with a value depending on the rank parity of the frame, the circuit comprises means (41, 42, 44) for generating a signal ($H_C$) causing the down-counting of the contents of the counter (43), which, for a frame having a predetermined rank parity, is identical to the train pulse signal (Tp), and for a frame whose rank pertains to the other parity, is constituted of pulses having a sign which is inversed with respect to that of said pulse train (Tp).

8. A circuit according to any one of the preceding claims, characterized in that, in order to generate the first rectangular signal ($Q_1$) of half the line frequency, it comprises a flip-flop (30) connected as a divide-by-two circuit, and a delay means, such as monostables (32, 34), receiving the composite synchronization signal, and generating a signal ($Q_4$) adapted to inhibit said flip-flop for one out of every two pulses during the periods of the equalizing and vertical synchro pulses.

9. A circuit according to claim 8, characterized in that said flip-flop generating a first rectangular signal ($Q_1$) is a JK type flip-flop whose clock input (H) receives the composite synchronization signal ($Q_3$) and whose inputs J and K are connected to the output of the delay means (32, 34).

10. A circuit according to any one of the preceding claims, characterized in that the means for generating the second rectangular signal ($Q_3$) comprises a flip-flop (31) such as a JK-type flip-flop connected as a divide-by-two circuit.

11. A circuit according to claim 4, characterized in that, in order to combine the two rectangular signals ($Q_1$ and $Q_3$) for producing said pulse train (Tp) containing a number of pulses, which depends on the rank parity of the frame, the circuit comprises a first gate (35) of the Exclusive-OR type, whose inputs ($35_1$, $35_2$) receive said respective rectangular signals ($Q_1$, $Q_3$), a flip-flop (38) of the D-type, whose clock input receives the composite synchronization signal and whose data input ($D_2$) receives the signal issuing from the first Exclusive-OR gate (35), and a second Exclusive-OR gate (37), whose first input ($37_2$) receives the output signal ($Q_6$) of the flip-flop (38) of the D-type and whose second input ($37_1$) receives a signal which represents the output of the first Exclusive-OR gate (35).

12. A circuit according to claim 11, characterized in that the signal applied to the second input ($37_1$) of the second Exclusive-OR gate (37) and to the data input ($D_2$) of the flip-flop (38) of the D-type is supplied by the output ($Q_5$) of another flip-flop (36) of the D-type, whose data input ($D_1$) is connected to the output of the first Exclusive-OR gate (35), and whose clock input (H) receives the composite synchronization signal.

**Patentansprüche**

1. Schaltung zur Dekodierung der Bild-Synchronimpulse des Synchroteils eines Videosignals in einem Halbbildsystem, bei der die Bild-Synchronimpulse n positive Impulse umfassen, denen n negative Früh-Ausgleichsimpulse vorausgehen und n negative Spät-Ausgleichsimpulse folgen, wobei die Bild-Synchronimpulse und die Ausgleichsimpulse mit einer Frequenz auftreten, die doppelt so hoch wie die Zeilenabtastfrequenz ist, dadurch gekennzeichnet, daß die Schaltung digitale Mittel aufweist, die ausgehend vom Synchroteil des Videosignals ein Rechtecksignal ($Q_1$) mit der halben Zeilenfrequenz und ein Rechtecksignal ($Q_3$) mit der halben Zeilenfrequenz während der Rahmendauer erzeugen, mit Ausnahme der Ausgleichs- und der Bild-Synchronimpulsperioden, in denen dieses Signal ($Q_3$) Zeilenfrequenz besitzt, wobei die relativen Phasenlagen dieser beiden Rechtecksignale von der Rangparität des Halbbilds abhängt, und daß die Schaltung ein Mittel (20, 22, 23, 24) zur Korrelation dieser Rechtecksignale ($Q_1$, $Q_3$) aufweist, um dekodierte Bild-Synchronimpulse zu erzeugen, deren Anfang praktisch ohne Verzögerung mit dem Anfang der Bildsynchronimpulse des Synchroteils des Videosignals zusammenfällt.

2. Schaltung nach Anspruch 1, dadurch gekennzeichnet, daß das Mittel (23, 24) zur Korrelation der Rechtecksignale ($Q_1$, $Q_3$) ein Mittel (23) zum Erzeugen eines Freigabesignals oder -fensters ($Q_{11}$) aus den Rechtecksignalen ($Q_1$, $Q_3$), dessen Anfang mit der hinteren Flanke des letzten Früh-Ausgleichsimpulses und dessen Ende mit einer Flanke des ersten Spät-Ausgleichsimpulses zusammenfällt, und einen Digitalkreis (24) zum Kombinieren des Freigabefensters mit dem Synchroteil des Videosignals zum Erzeugen der dekodierten Bild-Synchronimpulse aufweist.

3. Schaltung nach Anspruch 2, dadurch gekennzeichnet, daß der Kreis (24) zum Kombinieren des Freigabesignals mit dem Synchroteil des Videosignals eine Kippstufe (47) vom JK-Typ aufweist, an deren Nullsetzeingang das Freigabesignal ($Q_{11}$) geschaltet ist und deren an die Eingänge J und K angelegte Signale die Werte 1 bzw. 0 aufweisen, während der Takteingang (H) den Synchroteil des Videosignals empfängt.

4. Schaltung nach den Ansprüchen 1, 2 oder 3, dadurch gekennzeichnet, daß sie ein Mittel (20) zur Benutzung der verschiedenen relativen Phasenverschiebungen zwischen den Rechtecksignalen ($Q_1$ und $Q_3$) gemäß der Rangparität des Halbbildes zwecks Erzeugung einer Impulsfolge (Tp) aufweist, die nur während der Perioden des Früh- und Spät-Ausgleichs sowie des Halbbilds auftritt und die so beschaffen ist, daß die Anzahl der Impulse und die Zeitpunkte ihres Auftretens Funktionen der Rangparität des Halbbildes sind.

5. Schaltung nach den Ansprüchen 2 und 4, dadurch gekennzeichnet, daß sie zur Erzeugung des Freigabefensters ($Q_{11}$) einen Zähler (43) aufweist, der bei jedem Halbbild mit einer Zahl (N) geladen wird, die der größten Anzahl der Impulse der Impulsfolge (Tp) entspricht, wobei die Impulse dieser Folge (Tp) die Abwärtszählung des Inhalts dieses Zählers (43) steuern und Mittel (45 und 46) zur Erzeugung des Freigabesignals vorgesehen sind, wenn der Zählerinhalt zwischen einem ersten Wert (5) kleiner als N und einem zweiten Wert (2) kleiner als der erste, aber größer als Null ist.

6. Schaltung nach Anspruch 5, dadurch gekennzeichnet, daß sie einen Komparator (45) aufweist, an dessen ersten Eingang ($A_0$, $A_1$, $A_2$, $A_3$) das Ausgangssignal ($Q_a$, $Q_b$, $Q_c$, $Q_d$) des Zählers (43) geschaltet ist und dessen zweiter Eingang ($B_0$, $B_1$, $B_2$, $B_3$) vom Zustand einer Kippstufe (46) abhängt, die das Ausgangssignal ($45_1$) des Komparators (45) empfängt, damit dieses Signal am zweiten Eingang nacheinander den ersten und zweiten Wert annimmt.

7. Schaltung nach Anspruch 5 oder 6, dadurch gekennzeichnet, daß sie zum Laden des Zählers (43) auf einen von der Rangparität des Halbbildes abhängigen Wert Mittel (41, 42, 44) zur Erzeugung eines Steuersignals ($H_C$) zum Abwärtszählen des Inhalts des Speichers (43) aufweist, wobei das Steuersignal für ein Halbbild mit einer gegebenen Rangparität mit dem Signal (Tp) der Impulsfolge identisch ist, und für ein Halbbild mit einem der anderen Parität angehörenden Rang aus Impulsen mit entgegengesetztem Vorzeichen in Vergleich mit dem der Impulsfolge (Tp) zusammengesetzt ist.

8. Schaltung nach einem beliebigen der vorhergehenden Ansprüche, dadurch gekennzeichnet, daß sie zur Erzeugung des ersten Rechtecksignals ($Q_1$) mit der halben Zeilenfrequenz eine als Frequenzhalbierer geschaltete Kippstufe (30) sowie eine Mittel aufweist, wie etwa die monostabilen Kippstufen (32, 34), zur Verzögerung des Synchroteils des Videosignals, wobei dieses Mittel ein Signal ($Q_4$) erzeugt, welches diese Kippstufe alle zwei Impulse für die Dauer eines Impulses während der Periode des Ausgleichs- und der Bild-Synchronimpulse sperrt.

9. Schaltung nach Anspruch 8, dadurch gekennzeichnet, daß die das erste Rechtecksignal ($Q_1$) erzeugende Kippstufe eine Kippstufe vom JK-Typ ist, deren Takteingang (H) den Synchroteil des Videosignals empfängt und deren Eingänge J und K mit dem Ausgang des Verzögerungsmittels (32, 34) verbunden sind.

10. Schaltung nach einem beliebigen der vorhergehenden Ansprüche, dadurch gekennzeichnet, daß das Mittel zum Erzeugen des zweiten Rechtecksignals ($Q_3$) eine Kippstufe (31) wie etwa eine als Frequenzhalbierer geschaltete JK-Kippstufe ist.

11. Schaltung nach Anspruch 4, dadurch gekennzeichnet, daß sie zum Kombinieren der beiden Rechtecksignale ($Q_1$, $Q_3$) und zur Erzeugung der Impulsfolge (Tp), die eine Anzahl von Impulsen, die von der Rangparität des Halbbildes abhängt, ein erstes Tor (35) vom Typ Exklusiv-ODER, dessen Eingänge ($35_1$, $35_2$) jeweils eines der Rechtecksignale ($Q_1$, $Q_3$) empfangen, eine Kippstufe (38) vom Typ D, deren Takteingang das Vertikal-Synchronsignal und deren Dateneingang ($D_2$) das vom ersten Exklusiv-ODER-Tor (35) kommende Signal empfängt, und ein zweites Exklusiv-ODER-Tor (37) aufweist, dessen erster Eingang ($37_2$) das Ausgangssignal ($Q_6$) der Kippstufe (38) vom Type D und dessen zweiter Eingang ($37_1$) ein den Ausgang des ersten Exklusiv-ODER Tores (35) darstellendes Signal empfängt.

12. Schaltung nach Anspruch 11, dadurch gekennzeichnet, daß das an den zweiten Eingang ($37_1$) des zweiten Exklusiv-ODER-Tors (37) und an den Dateneigang ($D_2$) der Kippstufe (38) vom Typ D angelegte Signal vom Ausgang ($Q_5$) einer weiteren Kippstufe (36) vom Typ D geliefert wird, deren Dateneingang ($D_1$) mit dem Ausgang des ersten Exklusiv-ODER-Tors (35) verbunden ist und deren Takteingang (H) den Synchroteil des Videosignals empfängt.

# FIG_1-a

FIN
TRAME 2 →| |← DEBUT
|  TRAME 1

64µs    32µs    15   12
PRE-EGALISATION    TOP-TRAME    POST-EGALISATION    11d    10p
10    10d    11p    160µs

64µs

# FIG_1-b

FIN
TRAME 1 →| |← DEBUT
|  TRAME 2

15
10    11

64µs

11    10

64µs

# FIG_2

SYNCHRO
COMPOSITE  ▷

| DETECTION DE SIGNAUX A FREQUENCE TRAME | 20 | CIRCUIT D'INITIALISATION | 21 |

22
DECODAGE
TRAME PAIRE
TRAME IMPAIRE

GENERATEUR DE
FENETRE DE
VALIDATION    23

EXTRACTION
DU TOP TRAME    24

TOP
TRAME  ◁

EP 0 188 964 B1

**FIG_3**

FIG_4

# FIG_5

EP 0 188 964 B1

# FIG_6

EP 0 188 964 B1